Europäisches Patentamt

European Patent Office

Office européen des brevets

(11) Publication number: **0 433 207 A2**

# EUROPEAN PATENT APPLICATION

(21) Application number: **90500090.7**

(22) Date of filing: **19.09.90**

(51) Int. Cl.⁵: **F16K 5/06**

(30) Priority: **20.09.89 AR 314971**

(43) Date of publication of application:
**19.06.91 Bulletin 91/25**

(84) Designated Contracting States:
**DE ES FR GB IT**

(71) Applicant: **Combeau Vergara, Alberto**
**Providencia 1100**
**CL-1904 Santiago(CL)**

(72) Inventor: **Combeau Vergara, Alberto**
**Providencia 1100**
**CL-1904 Santiago(CL)**

(74) Representative: **Elzaburu Marquez, Alberto et al**
**Sres. Elzaburu Industrial Property Attorneys**
**Miguel Angel, 21**
**E-28010 Madrid(ES)**

(54) **Improvement of ball valve seats.**

(57) An improved ball valve for fluids, comprising a body composed of a main and lateral body which defines a longitudinal duct in which there is an obstructing ball having a cylindrical perforation, so that said ball may rotate around a stem joined to it so as to align said cylindrical perforation with said longitudinal duct; said ball being supported by two ring-shaped seats. Whereby the improvements are centered on the independency of the present functions of the seats rings: as ball supports and sealing elements; said rings being left, in accordance with the invention, related solely to the ball-supporting function and introducing a pair of elastic rings (O-rings) which perform the role of sealing elements.

FIG.1

# IMPROVEMENT OF BALL VALVE SEATS

This invention relates to ball valves which, in general, are useful in fluid pipe networks since they stand large pressures and a wide range of temperatures, without a noticeable variation of their performance. An additional advantageous characteristic of said valves lies in their practically negligible pressure drop in a state of maximum opening, in contrast with other types of valves. This particular type of valve has also the particularity of providing swift maneuverability since a 90-degree turn of the handle will suffice to change it from an open to a closed condition.

## BACKGROUND OF THE INVENTION

Ball valves basically consist of a body comprising a longitudinal duct for the fluid flow, in the center of which a ball is tightly interposed; having said ball a cylindrical perforation which is axial to the fluid flow when the valve is in a fully open condition. Said ball is joined to an actuating stem which is perpendicular to both the duct and the cylindrical perforation. Thus, the actuating stem allows the rotation of the ball from an obstructing position with its perforation perpendicular to the duct to its fully open condition, by means of a 90-degree turn, with its perforation coaxial to the duct.

Due to the fact that the ball is sustained between two ring-shaped seats which, traditionally, perform as ball supports as well as sealing elements, this type of valve presents inconveniences restricting its fluid-tightness efficiency when subjecting to temperature changes (although to a lesser degree than in other types of valves), because of the different thermal expansion coefficients possessed by the valve bodies, the seats, and the ball. This traditional design aspect also restricts the usage lifetime of the valve when it is used in positions intermediate to the fully open and closed conditions, because the ring-shaped seats become partially worn out and, since said seats also act as sealing elements, the fluid-tightness of the valve becomes impaired.

## SUMMARY OF THE INVENTION

The present invention relates to certain improvements introduced in the ball-type valves. The observation of the inconveniences of traditional ball valves shows that said inconveniences are caused by the restriction existing in the selection of materials for the manufacturing of the ring-shaped seats because said materials must be somewhat elastic to act as a seal but they must also possess some rigidity to act as seats. Because of this fact, the improvement of this invention basically consists in making the supporting of the ball independent from its sealing function. For this purpose, and as it will be further detailed, elastic rings (O-ring type) have been conveniently positioned so that they become in charge of sealing the surface between the ring-shaped seats and the body of the valve; said seats remaining only as structural supports of the ball.

Therefore, the present invention allows the choice, with a greater amplitude of the materials for the valve body, ring-shaped seats and the ball, seeking those with equal or similar thermal expansion coefficients, a fact that results in a better fluid-tightness efficiency, an economy of materials and in an improved sealing relationship, even if the ring-seats undergo a certain degree of wearing out.

An objective of the present invention is to provide a ball valve with an independent supporting function of its seats with respect to the sealing function around the ball.

Another objective of this invention is to provide an improved ball valve in which various materials may be utilized for its manufacturing without having its fluid-tightness affected by temperature changes.

A further objective of this invention is to provide an improved ball valve which does not lose its fluid-tightness when its seats have undergone wearing out due to usage.

## BRIEF DESCRIPTION OF THE DRAWING

To better understand the improvements introduced by this invention, a detailed explanation will be made with reference to the embodiment example, in which equal or equivalent parts are marked by the same numerals and in which:

- Fig. 1 represents an elevation view in cross section of a ball valve, in an open position, which includes the improvements of the invention.
- Fig. 2 illustrates an elevation view in cross section of the same valve as in Fig. 1, but in a closed position.
- Fig. 3 shows some isolated elements of Fig. 2 which allow a better appreciation of the improvements according to this invention.

## DETAILED DESCRIPTION OF THE DRAWINGS

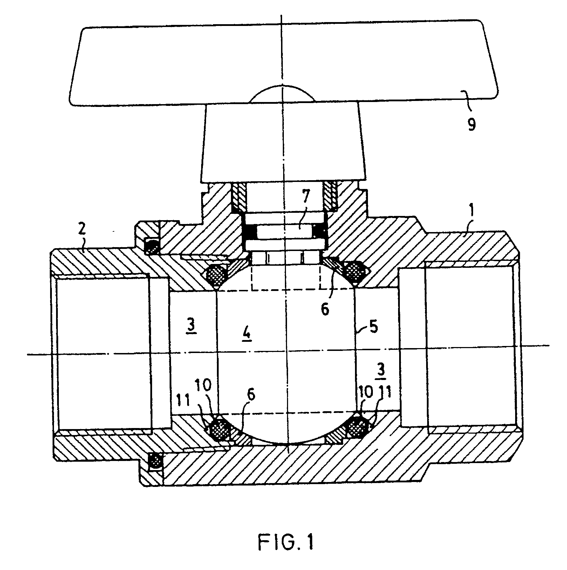

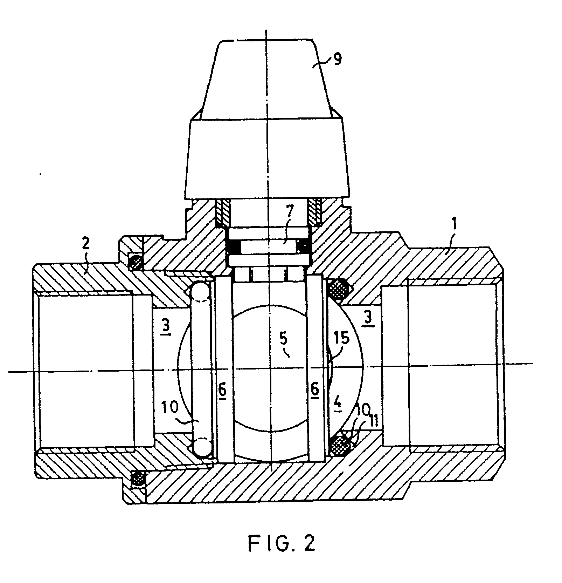

As it may be observed in Figs. 1 and 2 the valve is integrated, the same as in the traditional types, by a valve body composed of a main body 1 and a lateral body 2 which, when removed, allow free-access to the inner part of the valve for its assembly, clean-up or repair. The set formed by the main body 1 and the lateral body 2 has a longitudinal duct 3 for the fluid flow; said duct 3 having an obstructing ball 4 interposed, which presents a cylindrical perforation 5 susceptible to being coaxially oriented to duct 3. Said ball 4 rotates by means of a stem 7 which is connected to the outside of the valve through handle 9.

Obstructing ball 4 is limited, on each side of duct 3, by means of both ring-shaped seats 6. In traditional valves, these ring = shaped seats are made with a material having special physical properties (generally teflon) so that said seats may comply with their twofold function: as structural support of ball 4 to prevent its axial deviations and as a fluid-tight seal between the ball and the valve body.

It is in this part where this invention makes an important contribution in making independent the two above-mentioned functions, by utilizing elastic rings (or O-rings) 10, located in contact with ring-shaped seats 6, through their external planes, and in contact with cap portions of ball 4; said elastic rings 10 being seated in respective perimetrical ring-shaped slots 11 made in main body 1 and lateral body 2, in such a way that said slots 11 are oriented with their concavities in an axial form, facing each other. With a slot arrangement such as this, the elastic seals 10 are kept in contact with the zone intersecting the external part of the ring-shaped seats 6 with the ball surface so that said slots 11 are obtained with their concavities in an axial form and facing each other.

The operation of elastic seals 10 is not based on their axial but on their radial compression. For this purpose, their diameter is slightly larger than the diameter of the ring-shaped slots 11 and the mechanical properties of said elastic rings 10 are such that they behave as fluid bodies. The latter explanation, however, does not constitute a part of this invention since it corresponds to the basic operation principle of O-rings.

Fig. 2 pictures the valve already shown in Fig. 1, but now in a closed position. To emphasize the non-sealing function of the ring-shaped seats 6, an elastic ring 10 (the one on the left) has been illustrated as a whole while the other ring 10 (on the right) has been sectioned to show that, even though seat 6 allows a slight gap 15 with the cylindrical perforation 5 of ball 4, the sealing is efficiently accomplished through elastic rings 10 which remain in contact with seats 6 and the cap zones of ball 4.

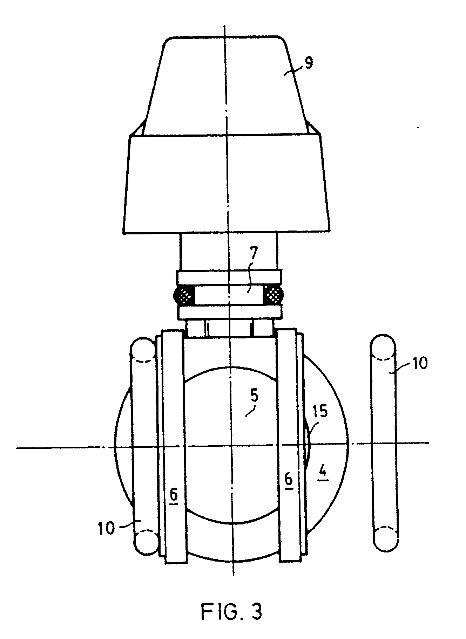

Fig. 3 reiterates this situation showing only the essential elements of this invention, wherein the elastic ring 10 of the right side has been displaced to show the gap 15, the object of which is merely to illustrate the additional advantage of this invention in admitting a larger than normal diameter of the perforation 5 of the ball 4; if required.

## Claims

1.- An improved ball valve for fluids, of the type made up by a body composed of a main and a lateral body defining a longitudinal duct within which there is an obstructing ball having a cylindrical perforation; being said ball able to rotate around a stem joined to it to align said cylindrical perforation with the said duct; said ball being supported by two ring-shaped seats; said valve having a perimetrical slot within said main body, which is located in the external vicinity of the ring-shaped seat farthest to the lateral body; said lateral body having another perimetrical slot, similar and symetrical to the previously-mentioned one, in the vicinity of the other ring-shaped seat so that said slots admit respective elastic rings which are kept in contact with the zone intersecting the external part of the ring-shaped seats and the ball surface.

2.- A ball valve as in claim 1, wherein the perimetrical slots retaining the elastic rings are oriented with their concavities axially and facing each other.

FIG. 1

FIG. 2

FIG. 3